# EUROPÄISCHE PATENTSCHRIFT

(11) **EP 2 467 247 B1**
(45) Veröffentlichungstag und Bekanntmachung des Hinweises auf die Patenterteilung: **04.11.2015**
(21) Anmeldenummer: 10751562.9
(22) Anmeldetag: 18.08.2010
(51) Int. Cl.: B29C 67/00

(54) **VERFAHREN UND VORRICHTUNG ZUR HERSTELLUNG EINES DREIDIMENSIONALEN OBJEKTES**
METHOD AND DEVICE FOR PRODUCING A THREE-DIMENSIONAL OBJECT
PROCÉDÉ ET DISPOSITIF DE FABRICATION D'UN OBJET TRIDIMENSIONNEL

(30) Priorität: 18.08.2009 DE 102009037815
(43) Veröffentlichungstag der Anmeldung: 27.06.2012
(73) Patentinhaber: Sintermask GmbH, 92331 Lupburg (DE)
(72) Erfinder: FRUTH, Carl, 92331 Parsberg (DE); HERMANN, David, 92331 Parsberg (DE)
(74) Vertreter: Schneider, Andreas
(86) Internationale Anmeldenummer: PCT/EP2010/005062
(87) Internationale Veröffentlichungsnummer: WO 2011/020599

(56) Entgegenhaltungen:
- EP-A2- 0 055 077
- WO-A1-95/15841
- WO-A1-2006/122564
- WO-A1-2007/112808
- US-A- 5 076 869
- US-A- 5 519 816
- US-A1- 2001 048 184

## Beschreibung

Die Erfindung betrifft ein Verfahren zur Herstellung eines dreidimensionalen Objektes durch selektives Verfestigen eines Aufbaumaterials, bei dem eine Maske mit wenigstens einer Strahlungsquelle flächig bestrahlt wird.

Aus dem Stand der Technik sind verschiedene generative Verfahren zur Herstellung dreidimensionaler Objekte bekannt, darunter beispielsweise das Lasersintern oder das SMS-Verfahren (Selective Mask Sintering), das nachfolgend auch als "Selektives Maskensintern" bezeichnet wird. Bei diesen thermischen Verfahren werden mit Hilfe einer additiven Fertigungsmethode dreidimensionale Objekte direkt aus CAD-Daten hergestellt. Dabei erfolgt der Aufbau des Objektes schichtweise, indem Schichten eines Aufbaumaterials sukzessive übereinander aufgetragen werden. Vor dem Aufragen der jeweils nächsten Schichten werden die dem zu fertigenden Objekt entsprechenden Stellen in den jeweiligen Schichten selektiv verfestigt. Das Verfestigen erfolgt durch lokales Erhitzen des pulverförmigen Schichtrohmaterials mit Hilfe einer Strahlungsquelle. Indem gezielt Strahlung in geeigneter Weise in die gewünschten Bereiche eingebracht wird, kann dabei eine exakt definierte, beliebig geartete Objektstruktur erzeugt werden. Dabei ist auch die Schichtdicke einstellbar. Ein solches Verfahren ist insbesondere zur Herstellung von dreidimensionalen Körpern verwendbar, indem mehrere dünne, individuell gestaltete Schichten aufeinanderfolgend erzeugt werden.

Materialien, die in derartigen Schichtbauverfahren zum Einsatz kommen, sind beispielsweise Harze, Kunststoffe, Metalle oder Keramiken. Anlagen, mit denen ein solches Schichtbauverfahren durchgeführt wird, werden auch als Schichtbauanlagen, oder Rapid Prototyping-Systeme bezeichnet.

Auch beim selektiven Maskensintern wird Pulver schichtweise aufgetragen und selektiv aufgeschmolzen. Im Unterschied zum Lasersintern wird jedoch anstelle einer punktförmigen Laserquelle eine flächig wirkende Strahlungsquelle, zumeist ein Infrarotstrahler, verwendet, der die Maske flächig bestrahlt. Damit wird ein lokales Aufschmelzen einer ganzen Objektebene in einem Schritt ermöglicht und die Belichtungszeit einer Schicht ist unabhängig von der Komplexität des Bauteils.

Üblicherweise wird die Maske aus IR-absorbierendem Material (z.B. Toner) auf einen transparenten Maskenträger, beilspielsweise eine Glasscheibe, gedruckt, der dann unmittelbar über einem im Bauraum angeordneten Pulverbett plaziert wird. Anschließend werden mit dem Infrarotstrahler alle nicht durch die Maske abgedeckten Bereiche in der Aufbauebene belichtet und aufgeschmolzen. Die Schicht entsteht nach dem Abkühlen durch Wärmeleitung in das Pulver und in das teilfertige Bauteil.

Der Infrarotstrahler erwärmt mit anderen Worten die Oberfläche des Pulverbettes durch die Maske hindurch und schmilzt die Partikel lokal auf. Diese bilden nach dem Erstarren eine Schicht des herzustellenden Bauteils. Dieser Prozeß wird Schicht für Schicht wiederholt, wobei entsprechend der zu erzeugenden-Objektebene bei jedem Belichtungsschritt eine entsprechend strukturierte Maske verwendet wird. Mit anderen Worten wird die Maske nach jedem Belichtungsschritt von dem Maskenträger gelöscht und der Maskenträger wird mit einer neuen Maske bedruckt.

Zugleich wird die Bauplattform nach jeder Belichtung um eine definierte Schichtdicke abgesenkt und der abgesenkte Bauraum wird mit frischem Pulver aufgefüllt und mit einem mit einem rakelähnlichen Verteiler aufgetragen. Parallel dazu wird der Maskenträger aus dem Bauraum gefahren, gereinigt und mit der neuen Maske versehen. Dann beginnt der Prozeß erneut, bis alle Schichten belichtet sind und damit das Objekt vollständig hergestellt ist.

Durch die Verwendung mehrerer Lichtquellen sowie durch Beugungseffekte entstehen hinter der Maske unterschiedliche Schattenbereiche, wie Kernschatten und Halbschatten, sowie auch sogenannte farbige Schatten aufgrund der Verwendung unterschiedlicher Wellenlängenbereiche. Daher ist es bei allen bisher bekannten Aufbautechniken erforderlich, daß die schattenbildende Maske direkt vor bzw. direkt über der zu belichtenden Schicht angeordnet ist. Mit anderen Worten wird bei allen aus dem Stand der Technik bekannten Verfahren angestrebt, den Abstand zwischen Maske und Aufbauebene so gering wie möglich zu halten.

Zur Verringerung des Abstandes wurde beispielsweise vorgeschlagen, die Maske nicht auf der Oberseite, sondern an der Unterseite des Maskenträgers anzubringen. Davon abgesehen, daß sich auch dadurch die Beugungseffekte nicht vollständig beseitigen lassen, ist es von Nachteil, daß bei diesem Lösungsansatz Maskierungsmaterial (Toner) auf das Bauteil herabfällt und die Objektschicht verunreinigt.

Bei allen bisher bekannten Verfahren von Nachteil ist es zudem, daß die Maske aufgrund der Bestrahlung sehr heiß wird, wobei beispielsweise Temperaturen zwischen 150° und 190° Celsius auftreten können. Die Temperaturstabilität des Maskierungsmaterials ist jedoch gering, so daß einmal verwendetes Maskierungsmaterial in der Regel nicht ein zweites Mal verwendet werden kann.

Aus US 2001/048184 A1 ist ein optisches stereolithographisches Gerät zur Ausführung einer optischen Stereolithographie bekannt, wobei eine Maske auf einem lichtdurchlässigen Element auf der Basis von Daten für eine Schicht hergestellt wird, eine ungehärtete Harzschicht aus fotohärtbarem Harz mit-Licht durch diese Maske belichtet wird und der Belichtungsvorgang wiederholt wird. Das optische stereolithographische Gerät hat ein optisches System, in welchem das lichtdurchlässige Element und die ungehärtete Harzschicht mit einem vorbestimmten Abstand zueinander beabstandet sind und die ungehärtete Harzschicht aus fotohärtbarem Harz durch die Maske einer Projektionsbelichtung unterzogen wird.

Aus EP 0 055 077 A2 ist ein lithographisches System bekannt, bei dem mit Hilfe einer Röntgenquelle ein mit absorbierendem Material maskiertes Kristallgitter bestrahlt wird. Die Strahlung wird an dem Kristallgitter definiert gebeugt und die Struktur des absorbierenden Maskenmaterials wird auf eine röntgenempfindliche Schicht des Wafers projiziert.

Eine Aufgabe der vorliegenden Erfindung ist es, die Herstellung eines dreidimensionalen Objektes vor dem Hintergrund der aus dem Stand der Technik bekannten Nachteile bekannter Verfahren zu optimieren. Diese Aufgabe wird durch ein Verfahren nach Anspruch 1 bzw. durch eine Vorrichtung nach Anspruch 10 gelöst.

Danach wird ein Verfahren zur Herstellung eines dreidimensionalen Objektes durch selektives Verfestigen eines Aufbaumaterials vorgeschlagen, bei dem eine Maske mit wenigstens einer Strahlungsquelle flächig bestrahlt wird, wobei die Maske entfernt von der Aufbauebene angeordnet ist und unter Verwendung einer Abbildeoptik ein Abbild der Maske auf der Aufbauebene erzeugt wird. Die Maske ist auf einem reflektierenden Maskenträger angeordnet und wird von der von der Strahlungsquelle abgegebenen Strahlung zweimal durchstrahlt. Das Verfahren ist dadurch gekennzeichnet, daß mehrere Strahlungsquellen vorgesehen sind, welche gleichzeitig oder alternativ zueinander verwendet werden.

Zugleich wird eine Vorrichtung zur Herstellung eines dreidimensionalen Objektes durch selektives Verfestigen eines Aufbaumaterials vorgeschlagen, wobei eine Maske mit wenigstens einer Strahlungsquelle flächig bestrahlt wird, mit einem Maskensystem, umfassend eine Maske, mit wenigstens einer Strahlungsquelle und mit einer Baukammer zur Aufnahme einer Aufbauebene, wobei die Maske entfernt von der Aufbauebene angeordnet ist und unter Verwendung einer Abbildeoptik ein Abbild der Maske auf der Aufbauebene erzeugt wird. Die Maske ist auf einem reflektierenden Maskenträger angeordnet und wird von der von der Strahlungsquelle abgegebenen Strahlung zweimal durchstrahlt. Die Vorrichtung ist dadurch gekennzeichnet, daß mehrere Strahlungsquellen vorgesehen sind, welche gleichzeitig oder alternativ zueinander verwendet werden können.

Der Maskenträger ist mit anderen Worten nicht transparent, wird also nicht, wie die Maske selbst, durchstrahlt. Statt dessen erfolgt eine diffuse Reflexion der die Maske flächig bestrahlenden Strahlung auf dem Maskenträger. Bei der Verwendung eines solchen Spiegelsystems wird die Maske zweimal durchstrahlt, da die einmal die Maske durchstrahlende Strahlung an dem Maskenträger reflektiert wird und daraufhin ein zweites Mal die Maske durchstrahlt, bevor sie die Maske wieder verläßt. Da die Maske in diesem Fall zweimal durchstrahlt wird, kann die optische Dichte des Maskierungsmaterials geringer sein, als dies bei einer einmaligen Durchstrahlung notwendig ist. In der Folge kann entweder ein anderes Maskierungsmaterial verwendet werden oder aber es muß weniger Maskierungsmaterial auf den Maskenträger aufgetragen werden als im Fall eines transparenten Maskenträgers.

Erfindungsgemäß sind mehrere Strahlungsquellen vorgesehen, die gleichzeitig oder aber alternativ zueinander verwendet werden können. Damit lassen sich eine Vielzahl weiterer Vorteile realisieren.

So ist es dann zum einen möglich, die insgesamt eingebrachte Energiemenge bzw. die Energiedichte im Abbild zu erhöhen. Da pro Zeiteinheit besonders viel Energie in die Aufbauebene eingebracht werden kann, wird das Aufschmelzen und damit der Bauprozeß beschleunigt.

Während mit herkömmlichen Projektionssystemen nur vergleichsweise geringe Leistungen erreicht werden können, arbeitet die erfindungsgemäße Technologie in völlig anderen Leistungsdimensionen. So liegt die bei der Durchführung des erfindungsgemäßen Verfahrens verwendeten Energiedichte beim Aufschmelzen von herkömmlichen Kunststoffmaterial, z. B. Polyamid, in einem Bereich von 1 bis 10 Watt pro Quadratzentimeter, vorzugsweise in einem Bereich von 2 bis 5 Watt pro Quadratzentimeter. Bei herkömmlichen Anlagen liegen die Energiedichten hingegen typischerweise in einem Bereich von 0,001 bis 0,05 Watt pro Quadratzentimeter.

Die letzte optische Komponente des Projektionssystems (der Abbildeoptik) überträgt vorzugsweise eine Strahlungsleistung von mindestens einem Kilowatt. In einer bevorzugten Ausführungsform der Erfindung empfängt die Aufbauebene eine Energie von 2 bis 5 Kilowatt.

Vor dem Hintergrund des durch die Erfindung bereitgestellten Herstellungsverfahrens wird zudem ein neuartiges Aufbaumaterial sowie dessen Verwendung beschrieben. Es wird ein Aufbaumaterial für die Herstellung eines dreidimensionalen Objektes durch selektives Verfestigen vorgeschlagen, wobei das Aufbaumaterial wenigstens eine Materialeigenschaft aufweist, welche durch Bestrahlung des Materials in Abhängigkeit von der verwendeten Strahlung aktivierbar ist.

Vorteilhafte Ausführungen der Erfindung sind in den Unteransprüchen angegeben. Die im Folgenden im Zusammenhang mit dem Verfahren erläuterten Vorteile und Ausgestaltungen gelten sinngemäß auch für das erfindungsgemäße System und umgekehrt.

Eine Kernidee der Erfindung ist es, die oben geschilderten Probleme zu umgehen, indem die Maske entfernt von der Aufbauebene angeordnet wird. Mit anderen Worten wird vorgeschlagen, den Abstand zwischen der Aufbauebene einerseits und der von der wenigstens einen Strahlungsquelle flächig bestrahlten Maske andererseits zu vergrößern. Dies wird erfindungsgemäß erreicht durch die Verwendung einer Abbildeoptik, beispielsweise in Gestalt eines Linsensystems. Mit der Erfindung wird ein weiterentwickeltes Maskensinterverfahren bereitgestellt, bei dem.eine flächige Bestrahlung der Maske und damit verbunden ein Aufschmelzen einer ganzen Objektebene in einem einzigen Schritt mit einer entfernt von der Aufbauebene angeordneten Maske kombiniert wird. Im Ergebnis wird auf der Aufbauebene nicht, wie bei bekannten Systemen, ein Maskenschatten abgebildet. Statt dessen wird eine Abbildung der Maske auf die Aufbauebene projiziert. Anders als bei herkömmlichen Verfahren, können extrem große Energiemengen übertragen und für die Maskenprojektion verwendet werden. Dadurch ist es möglich, die Auflösung und die Abbildungsgenauigkeit gegenüber bekannten Systemen zu erhöhen.

Unter dem Begriff der Abbildeoptik wird dabei ein optisches System verstanden, das zur Realisierung einer optischen Abbildung ausgebildet ist. Mit anderen Worten wird durch Vereinigung von elektromagnetischer Strahlung, die von einem Punkt eines Gegenstandes ausgeht, mit Hilfe des optischen Systems in einem Bildpunkt ein Abbild erzeugt. Bezogen auf die vorliegende Erfindung bedeutet dies, daß die Abbildeoptik ein Abbild der Maske in der Aufbauebene erzeugt, welches sich in der Baukammer befindet. Durch die Verwendung der Abbildeoptik kann, anders ausgedrückt, die Maske an einer nahezu beliebigen Position angeordnet sein.

Um die Maske mit der von der Strahlungsquelle ausgehenden Strahlung flächig zu bestrahlen, ist zudem ein Belichtungssystem vorgesehen, das mit der Maske einerseits und mit der Abbildeoptik andererseits zusammenwirkt, um die erfindungsgemäße Wirkung zu erzielen.

Sowohl das Belichtungssystem, als auch die Abbildeoptik und die Position der Maske sind dabei vorzugsweise derart aufeinander abgestimmt, daß ein überwiegender Teil der von der flächig bestrahlten Maske ausgehenden unerwünschten Strahlung (diffuse Transmission, diffuse Reflexion) nicht in die Abbildeoptik gelangt. In Verbindung mit der endlichen Apertur der Abbildeoptik kann die Bildung unerwünschter Schatten damit im wesentlichen ausgeschlossen werden. Die Verwendung der Abbildeoptik dient somit auch zur Erhöhung des Kontrastes des Abbildes. Darüber hinaus können durch die Abbildeoptik die durch verschiedene Wellenlängen entstehenden Abbildefehler, wie beispielsweise eine chromatische Aberration, ausgeglichen werden.

Wird die Maske mit Hilfe der Abbildeoptik auf die Aufbauebene projiziert, dann erfolgt mit anderen Worten eine vergrößerte, verkleinerte oder anders modifizierte Übertragung des Maskenbildes auf die Aufbauebene, die dann als Projektionsfläche dient. Mit der Erfindung können somit einerseits sehr kleine hochaufgelöste Objekte und andererseits sehr große Objekte mit geringer Auflösung in einer einzigen Schichtbauanlage hergestellt werden. Durch die aufgrund der Projektion mögliche Vergrößerung bzw. Verkleinerung wird in Verbindung mit verschiedenen Auflösungen der Maske mit der Erfindung ein besonders universell einsetzbares additives Fertigungsverfahren bereitgestellt.

Erfolgt eine Verkleinerung der Maske, wird damit durch die Abbildeoptik zugleich auch die Energiedichte in der Aufbauebene erhöht. Die Maske dient mit anderen Worten als "Verstärker", wobei zum einen die in die Aufbauebene pro Zeiteinheit eingebrachte Energiemenge, als auch zum anderen die pro Oberflächeneinheit der Aufbauebene eingebrachte Energiemenge individuell gesteuert, insbesondere erhöht werden kann.

Unter einer Maske wird bei der vorliegenden Erfindung eine Struktur verstanden, die eine selektive Transmission von Strahlung erlaubt. Jede Maske umfaßt anders ausgedrückt durchlässige Bereiche ("Öffnungen") und undurchlässige Bereiche und wird von der Strahlung, welche von der Strahlungsquelle abgegeben wird, wenigstens einmal durchstrahlt, wobei die Strahlung bei der Durchstrahlung zumindest teilweise absorbiert wird.

Die Erfindung ist unabhängig von der verwendeten Maskentechnologie. Bei den eingesetzten Masken kann es sich somit einerseits um die bereits erwähnten Tonermasken handeln, bei denen ein Toner als Maskierungsmaterial auf eine als Maskenträger dienende Glasplatte oder dergleichen aufgedruckt wird. Anstelle von Tonermasken können aber auch LCD-Masken verwendet werden bzw. Masken, die nach dem e-Paper-Prinzip funktionieren. Im folgenden wird beispielhaft davon ausgegangen, daß eine Tonermaske Verwendung findet.

Vorzugsweise besteht die Maske aus zumindest teilweise absorbierendem Maskierungsmaterial. In einer anderen Ausführungsform wird ein Maskierungsmaterial verwendet, das die eingehende Strahlung ungerichtet, also diffus reflektiert. Mit anderen Worten erfolgt an der Maske entweder eine zumindest teilweise Absorption oder aber eine diffuse Reflexion der eintreffenden Strahlung.

Besonders vorteilhaft ist es, wenn die Temperatur des maskenträgers veränderbar ist. Dies kann einerseits durch eine "passive" Temperierung erfolgen, beispielsweise dadurch, daß ein Maskenträger aus Metall verwendet wird, bei dem aufgrund der hohen Wärmeleitfähigkeit eine rasche Wärmeabfuhr der von dem Maskierungsmaterial aufgenommenen und in den Maskenträger übertragenen Energie und damit eine Kühlung der Maske stattfindet. Alternativ oder zusätzlich dazu kann eine "aktive" Temperierung des Maskenträgers erfolgen. Insbesondere ist eine aktive Kühlung des Maskenträgers möglich, so daß die Temperaturbelastung des Maskierungsmaterials insgesamt verringert werden kann. Selbstverständlich ist es alternativ dazu ebenfalls möglich, den Maskenträger zu erwärmen.

Ist die Temperaturbelastung des Maskierungsmaterials nur gering, kann dieses mehrfach, d. h. für mehrere Aufschmelzvorgänge verwendet werden.

In einer weiteren vorteilhaften Ausführungsform der Erfindung ist die wenigstens eine Strahlungsquelle beweglich angeordnet. Dies ist insbesondere dann von Vorteil, wenn durch eine Bewegung der Strahlungsquelle eine besonders gleichmäßige Energiemenge pro Flächeneinheit auf die Aufbauebene erreicht werden kann.

Mit Hilfe der Erfindung ist es möglich, den auf der Aufbauebene auftreffenden Energiestrom zu erhöhen. Kommen dabei spektral schmalbandige Strahlungsquellen zum Einsatz, kann der Kontrast und damit die Auflösungs- bzw. Abbildegenauigkeit, d.h. die Genauigkeit, mit der die Maske auf der Aufbauebene abgebildet wird, erheblich erhöht werden. Bei der Verwendung breitbandiger Strahlungsquellen kann hingegen mehr Energie zulasten der Auflösungsgenauigkeit übertragen werden. Der Betrieb einer Schichtbauanlage, in der sowohl schmalbandige, als auch breitbandige Strahlungsquellen vorgesehen sind, kann daher einfach an verschiedene Anforderungen angepaßt werden. Eine derartige Schichtbauanlage ist besonders universell einsetzbar.

Werden mehrere Strahlungsquellen verwendet, ist es darüber hinaus zur Vermeidung von Abbildungsfehlern von Vorteil, wenn die Abmessungen der Quellen möglichst gering sind. Vorzugsweise werden solche Strahlungsquellen verwendet, die möglichst idealen Punktquellen entsprechen.

Darüber hinaus ist es bei der Verwendung mehrerer Strahlungsquellen möglich, in unterschiedliche Teilbereiche des Abbilds unterschiedliche Energiemengen einzubringen. Damit ist eine selektive Belichtung möglich.

Verschiedene weitere Belichtungsvarianten können verwirklicht werden, wenn es sich bei den mehreren Strahlungsquellen zugleich um Quellen mit unterschiedlicher Leistung und/oder mit unterschiedlichen Wellenlängen bzw. Wellenlängenspektren handelt. Dann ist es nicht nur möglich, bestimmte Teilbereiche des Abbildes von mehreren, gegebenenfalls verschiedenartigen Strahlungsquellen bestrahlen zu lassen. Es kann auch gesteuert werden, in welche Teilbereiche des Abbildes welche Energiemengen eingebracht werden. Darüber hinaus ist die Maximalleistung jedes Belichtungsschrittes individuell einstellbar und es können bei der Herstellung des dreidimensionalen Objektes Aufbaumaterialien verwendet werden, deren Materialeigenschaften wellenlängenabhängig aktivierbar sind, wie dies weiter unten näher beschrieben wird.

Bei der Verwendung mehrerer Strahlungsquellen kann vorgesehen sein, daß diejenigen Strahlungsquellen, die vollständig maskierte Teile des Abbilds mit Energie versorgen würden, während des Befestigungsvorgangs abgeschaltet werden. Damit kann eine unnötige Aufwärmung der Maske bzw. des Maskenträgers vermieden werden.

Der vergrößerte Abstand zwischen der Maske und der Aufbäuebene führt konstruktiv zu einer Trennung von Maskensystem und Baukammer. Hierdurch ergibt sich nicht nur eine geringere Temperaturbelastung des Maskierungsmaterials. Auch die Temperaturverteilung in der Baukammer kann gegenüber den herkömmlichen Verfahren verbessert werden, da eine definierte Baukammeratmosphäre (Druck, Temperatur, ...) in der Baukammer geschaffen werden kann. Insbesondere kann in der Baukammer ein Vakuum erzeugt werden, wodurch ein besonders sauberes Herstellungsverfahren möglich ist. Ist zudem die Abbildeoptik derart ausgebildet, daß sie die Baukammer begrenzt, ist auch kein "optisches Fenster" in der Baukammer erforderlich.

Die Abbildeoptik selbst umfaßt vorzugsweise wenigstens eine Linse. In der Praxis wird in der Regel ein Linsensystem verwendet werden. Das Belichtungssystem umfaßt vorzugsweise einen zwischen der Strahlungsquelle und der Maske angeordneten Homogenisator ("Lichtmischer"), der die von der Strahlungsquelle kommende Strahlung auf die Maske lenkt und eine vollflächige Bestrahlung der Maske sicherstellt. Anstelle des Homogenisators können auch andere optische Elemente als Bestandteile des Belichtungssystems verwendet werden.

In einer Ausführungsform der Erfindung umfaßt die Abbildeoptik einen reflektierenden Maskenträger und eine Offner-Relay-Anordnung. Dabei handelt es sich um eine nicht vergrößernde optische Baugruppe mit zwei konzentrischen Spiegeln, bei der alle größeren Abberationen effektiv ausgelöscht werden. Grundlagen zum Prinzip einer solchen Anordnung sind z.B. in US 3,748,015 beschrieben. Auch im vorliegenden Fall wird die Offner-Relay-Anordnung in erster Linie dazu verwendet, um Fehler aus der Abbildung zu eliminieren. In einer besonders bevorzugten Ausführungsform der Erfindung ist die Offner-Relay-Anordnung die einziges optische Baugruppe der Abbildeoptik.

Der Maskenträger ist vorzugsweise beweglich angeordnet derart, daß er zum Wechsel der Maske aus dem Strahlengang der Abbildeoptik herausbewegt werden kann. Zur Vergrößerung bzw. Verkleinerung des Abbildes der Maske wird vorzugsweise nicht der Maskenträger bewegt. Vielmehr erfolgt eine entsprechende Positionierung der Elemente der Abbildeoptik, beispielsweise einzelner Linsen.

Werden Strahlungsquellen mit unterschiedlichen Wellenlängen bzw. Wellenlängenspektren verwendet, z.B. Infrarot-Strahlungsquellen, Ultraviolett-Strahlungsquellen usw., so ist dem Aufbaumaterial, welches zumeist in Pulverform vorliegt, neben dem Grundmaterial, welches bei der Absorption von Strahlung einer bestimmten Arbeitswellenlänge aufschmilzt, ein zusätzliches Absorbermaterial beigemischt. Dieses zusätzliche Absorbermaterial absorbiert Strahlung bei einer weiteren, von der Arbeitswellenlänge verschiedenen Wellenlänge bzw. Strahlung eines weiteren Wellenlängenspektrums. Zugleich wird durch die Absorption dieser weiteren Strahlung eine bestimmte Eigenschaft des Aufbaumaterials aktiviert. So ist es beispielsweise möglich, definierte Bereiche, die nicht nur mit der

Arbeitswellenlänge, sondern zugleich mit der weiteren Wellenlänge bestrahlt werden, einzufärben, wenn durch die Absorption der zusätzlichen Wellenlänge eine Farbänderung im Aufbaumaterial erfolgt. Andere Materialeigenschaften, welche durch Absorption von Strahlung einer bestimmten Wellenlänge aktivierbar sind, sind möglich. Darüber hinaus ist es auch möglich, ein Aufbaumaterial vorzusehen, welches auf verschiedene Arbeitswellenlängen reagiert, wobei eine der Arbeitswellenlängen zugleich auch eine Wellenlänge ist, mit der eine bestimmten Materialeigenschaft aktivierbar ist.

Ein Ausführungsbeispiel der Erfindung wird nachfolgend anhand der Zeichnungen näher erläutert. Hierbei zeigen:
- Fig. 1: eine Darstellung einer Schichtbauanlage nach dem Stand der Technik,
- Fig. 2: eine Darstellung einer Schichtbauanlage,
- Fig. 3: eine Darstellung des Strahlengangs bei einem Durchstrahlen des Maskenträgers,
- Fig. 4: eine Darstellung des Strahlengangs bei einem Spiegelsystem,
- Fig. 5: eine Darstellung des Strahlengangs bei mehreren Strahlungsquellen und
- Fig. 6: eine Darstellung des Strahlengangs bei einem Spiegelsystem mit mehreren Strahlungsquellen.

Sämtliche Figuren sind lediglich schematisch und zeigen lediglich wesentliche Bestandteile.

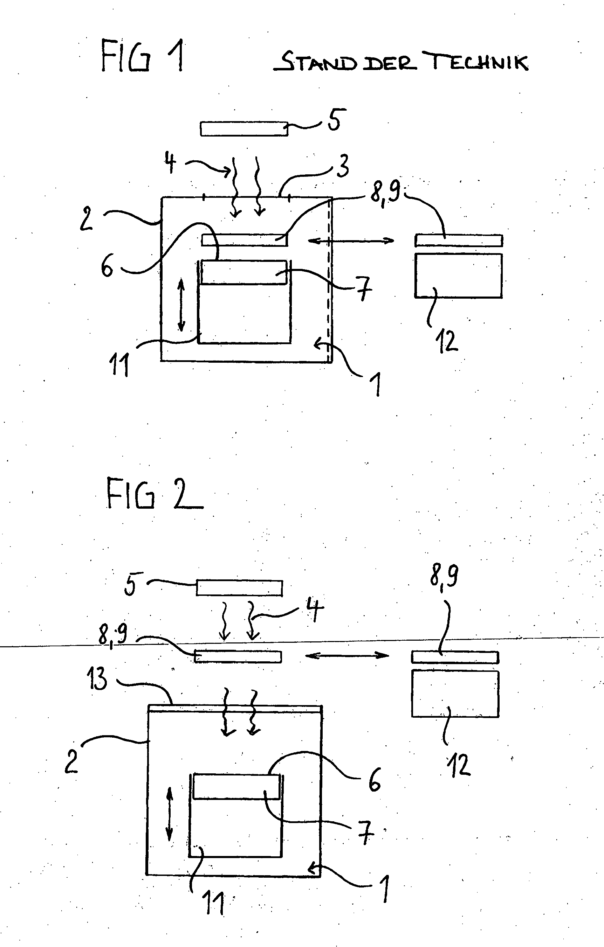

Eine aus dem Stand der Technik bekannte Schichtbauanlage ist schematisch in Fig. 1 abgebildet. In der den Bauraum 1 begrenzenden Baukammer 2 der Anlage ist ein optisches Fenster 3 vorgesehen, durch das Infrarotstrahlung 4 von einer außerhalb der Baukammer 2 angeordneten Strahlungsquelle 5 in die Baukammer 2 eintreten kann. Die dort unmittelbar oberhalb der Aufbauebene 6 des herzustellenden Objektes 7 auf einem Maskenträger 8 angeordnete Tonermaske 9 wird mit der Infrarotstrahlung 4 flächig bestrahlt, wodurch eine Schicht des Objektes 7 aufgebaut wird. Nach der Belichtung der Schicht fährt das Pulverbett 11 einen definierten Weg nach unten und der Maskenträger 8 wird zum Aufdrucken der für die Belichtung der nächsten Schicht benötigten Maske 9 durch einen Drucker 12 aus der Baukammer 2 herausgefahren.

In Fig. 2 ist Schichtbauanlage schematisch dargestellt. Das hier verwendete Maskensystem ist außerhalb der Baukammer 2 angeordnet. Insbesondere ist der Maskenträger 8 mit der Tonermaske 9 entfernt von der sich in der Baukammer 2 befindenden Aufbauebene 6 und zwar außerhalb der Baukammer 2 und räumlich von dieser getrennt angeordnet. Die Baukammer 2 selbst ist abgeschlossen. Im Inneren der Baukammer 2 und somit im Bauraum 1 liegt ein Vakuum an. Die Baukammer 2 ist konstruktiv durch ein Element 13 einer Abbildeoptik begrenzt. Bei dem Element 13 der Abbildeoptik, welches eine Baukammerbegrenzung bildet, handelt es sich beispielsweise um eine Linse des Linsensystems der Abbildeoptik.

Als Strahlungsquelle 5 dient ein Infrarotstrahler. Dieser bestrahlt die Maske 9 vollflächig. Weitere Elemente der Abbildeoptik sind aus Gründen der Übersichtlichkeit nicht abgebildet. Das Element 13 symbolisiert in der dargestellten Variante die gesamte Abbildeoptik schematisch. Tatsächlich umfaßt die Abbildeoptik zumeist mehrere, in der Regel auch unterschiedlich optische Elemente, wie beispielsweise Linsen, Filter, Spiegel oder dergleichen.

Die von der Strahlungsquelle bestrahlte Tonermaske 9 ist außerhalb der Baukammer 2, entfernt von der Aufbauebene 6 angeordnet. Das Abbild der Maske 9 auf der Aufbauebene 6 wird unter Verwendung der Abbildeoptik erzeugt, indem ein Abbild der Maske 9 auf die Aufbauebene 6 projiziert wird.

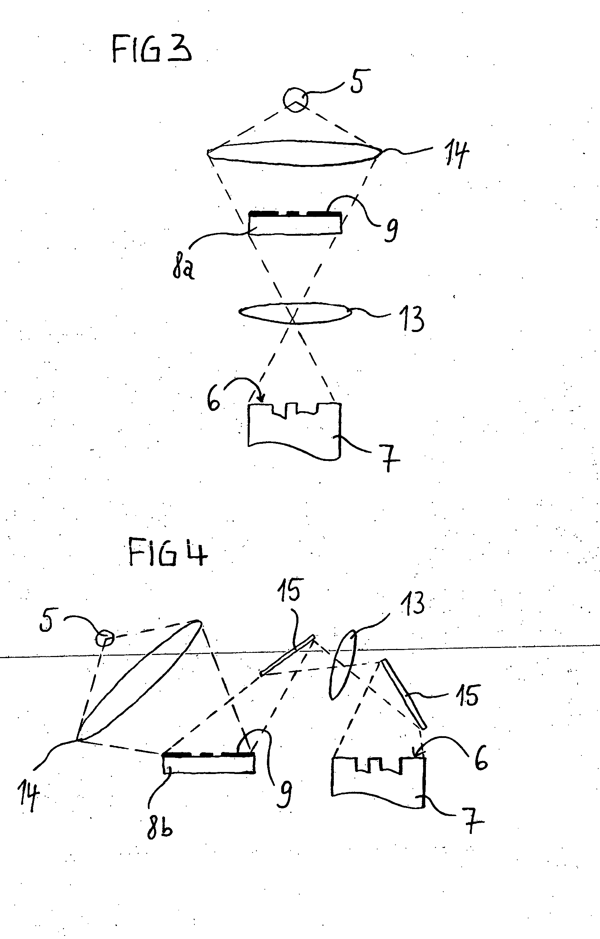

In der in Fig. 3 dargestellten Ausführungsform ist die Maske 9 auf einem transparenten Maskenträger 8a angeordnet. Die von der Strahlungsquelle 5 ausgesandte Infrarotstrahlung 4 wird unter Verwendung eines zwischen der Strahlungsquelle 5 und der Maske 9 angeordneten Homogenisators 14 vollflächig auf die Maske 9 aufgebraucht und durchstrahlt sowohl die Maske 9, als auch den Maskenträger 8, bevor sie in die Abbildeoptik eingekoppelt und auf die Aufbauebene 6 projiziert wird. Die Abbildeoptik wird dabei wieder durch das optische Element 13 symbolisiert. Der Homogenisator 14 steht stellvertretend für das Belichtungssystem. Anstelle des Homogenisators 14 könnte das Belichtungssystem auch eine Sammellinse oder ein anderes optisches Bauelement umfassen.

In der in Fig. 4 dargestellten Ausführungsform ist die Maske 9 auf einem reflektierenden Maskenträger 8b angeordnet. Der Auftrag des Maskierungsmaterials kann wegen des doppelten Durchtritts der Infrarotstrahlung 4 durch die Maske 9 entsprechend optimiert werden. Die Abbildeoptik umfaßt hier neben einer Linse 13 auch zwei Spiegel 15.

Bei den gezeigten Ausführungsformen kann der Maskenträger 8 aktiv gekühlt werden, so daß das zur Erzeugung der Maske 9 verwendete Maskierungsmaterial (Toner) mehrfach verwendet werden kann.

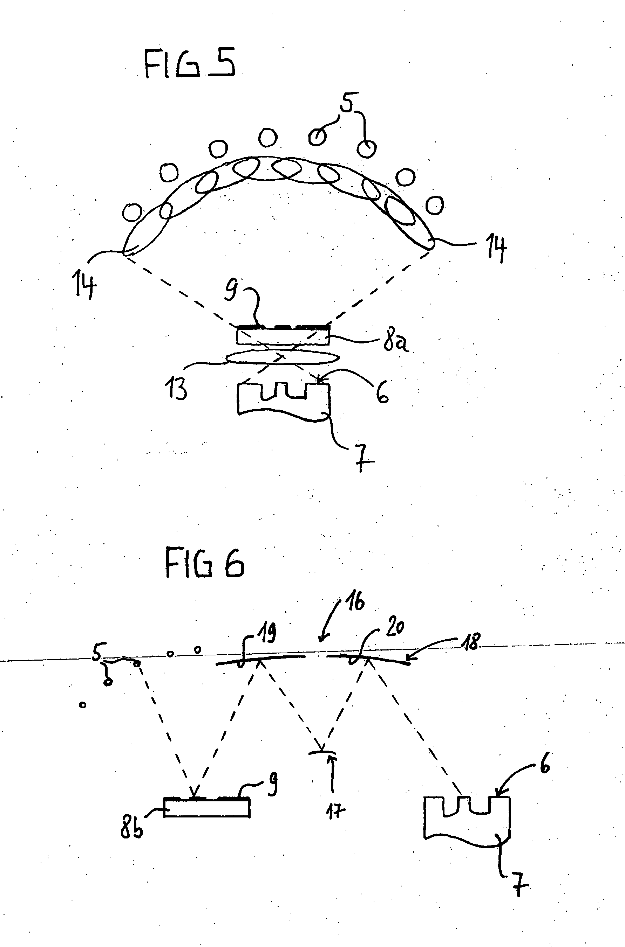

In der in Fig. 5 dargestellten Ausführungsform sind mehrere Strahlungsquellen 5 vorgesehen, die gleichzeitig verwendet werden, so daß in unterschiedliche Teilbereiche des Abbilds in der Aufbauebene 6 verschiedene Energiemengen eingebracht werden können.

Zugleich werden Strahlungsquellen 5 mit unterschiedlichen Leistungen und unterschiedlichen Wellenlängen bzw. Wellenlängenspektren verwendet, so daß der Energieeintrag für ausgewählte Bereiche des Abbilds individuell gesteuert werden kann. Durch die Verwendung von Aufbaumaterialien, deren Eigenschaften wellenlängenselektiv aktivierbar sind, können somit Objekte mit individuellen Objekteigenschaften hergestellt werden. Strahlungsquellen 5, welche nicht zur Verfestigung der Aufbauebene 6 beitragen, sind dabei ausgeschaltet.

In der in Fig. 6 dargestellten Ausführungsform der Erfindung wird, wie bei der in Fig. 4 dargestellten Ausführungsform, ein reflektierender Maskenträger 8b verwendet. Anders als dort, kommen jedoch mehrere, nahezu punktförmige Strahlungsquellen zum Einsatz. Die Abbildeoptik umfaßt hier keine Linse, sondern eine Offner-Relay-Anordnung 16 mit einem zentralen konvexen Spiegel 17 und einem konkaven Spiegel 18. Die von den Strahlungsquellen abgegebene, auf die Maske 9 auftreffende Strahlung durchdringt die Maske 9 zweimal, da sie an dem Maskenträger 8b reflektiert wird. Die von der Maske 9 ausgehende Strahlung trifft auf den ersten reflektierenden Bereich 19 der Offner-Relay-Anordnung 16. Nach drei Reflexionen innerhalb der Anordnung 16 verläßt die Strahlung diese und wird auf die Aufbauebene 6 projiziert. Die beiden reflektierenden Bereichen 19 und 20 gehören zu dem selben Spiegel 18 der Offner-Relay-Anordnung 16.

Sowohl die Abbildeoptik, als auch das Belichtungssystem ist den dargestellten Ausführungsformen lediglich symbolisch dargestellt. Beide Systeme können, je nach Ausführung und gewünschtem Ergebnis, alle möglichen optischen Bauelemente umfassen. Anstelle der beispielhaft genannten Infrarotstrahler können Strahlungsquellen verwendet werden, die mit anderen Wellenlängen oder Wellenlängenbereichen arbeiten.

### Bezugszeichenliste

- 1: Bauraum
- 2: Baukammer
- 3: optisches Fenster
- 4: Infrarotstrahlung
- 5: Strahlungsquelle
- 6: Aufbauebene
- 7: Objekt
- 8: Maskenträger
- 9: Maske
- 10: (frei)
- 11: Pulverbett
- 12: Drucker
- 13: Element der Abbildeoptik
- 14: Homogenisator
- 15: Spiegel
- 16: Offner-Relay-Anordnung
- 17: erster Spiegel
- 18: zweiter Spiegel
- 19: erster reflektierender Bereich
- 20: zweiter reflektierender Bereich

## Patentansprüche

1. Verfahren zur Herstellung eines dreidimensionalen Objektes (7) durch selektives Verfestigen eines Aufbaumaterials, bei dem eine Maske (9) mit wenigstens einer Strahlungsquelle (5) flächig bestrahlt wird, wobei die Maske (9) entfernt von der Aufbauebene (6) angeordnet ist und unter Verwendung einer Abbildeoptik (13) ein Abbild der Maske (9) auf der Aufbauebene (6) erzeugt wird, **dadurch gekennzeichnet, daß** die Maske (9) auf einem reflektierenden Maskenträger (8b) angeordnet ist und von der von der Strahlungsquelle (5) abgegebenen Strahlung (4) zweimal durchstrahlt wird, und daß mehrere Strahlungsquellen (5) vorgesehen sind, welche gleichzeitig oder alternativ zueinander verwendet werden.

2. Verfahren nach Anspruch 1, **dadurch gekennzeichnet, daß** ein Abbild der Maske (9) auf die Aufbauebene (6) projiziert wird.

3. Verfahren nach einem der Ansprüche 1 oder 2, **dadurch gekennzeichnet, daß** die Maske (9) aus zumindest teilweise die Wellenlänge bzw. das Wellenlängenspektrum der verwendeten Strahlungsquelle (5) absorbierenden Maskierungsmaterial und/oder aus die Wellenlänge bzw. das Wellenlängenspektrum der verwendeten Strahlungsquelle (5) diffus reflektierenden Maskierungsmaterial besteht.

4. Verfahren nach einem der Ansprüche 1 bis 3, **dadurch gekennzeichnet, daß** die Temperatur des Maskenträgers (8) veränderbar ist.

5. Verfahren nach einem der Ansprüche 1 bis 4, **dadurch gekennzeichnet, daß** das Maskierungsmaterial mehrfach verwendet wird.

6. Verfahren nach einem der Ansprüche 1 bis 5, **dadurch gekennzeichnet, daß** wenigstens eine Strahlungsquelle (5) beweglich angeordnet ist.

7. Verfahren nach einem der Ansprüche 1 bis 6, **dadurch gekennzeichnet, daß** in erste Teilbereiche des Abbilds eine andere Energiemenge eingebracht wird, als in zweite Teilbereiche des Abbilds.

8. Verfahren nach einem der Ansprüche 1 bis 7, **dadurch gekennzeichnet, daß** gleichzeitig Strahlungsquellen (5) mit unterschiedlicher Leistung und/oder mit unterschiedlichen Wellenlängen bzw. Wellenlängenspektren verwendet werden.

9. Verfahren nach einem der Ansprüche 1 bis 8, **dadurch gekennzeichnet, daß** Strahlungsquellen (5), welche nicht zur Verfestigung der Aufbauebene (6) beitragen, während des Verfestigungsvorgangs nicht aktiviert sind.

10. Vorrichtung zur Herstellung eines dreidimensionalen Objektes (7) durch selektives Verfestigen eines Aufbaumaterials, wobei eine Maske (9) mit wenigstens einer Strahlungsquelle (5) flächig bestrahlt wird,
- mit einem Maskensystem (8, 9, 12), umfassend eine Maske (9),
- mit wenigstens einer Strahlungsquelle (5) und
- mit einer Baukammer (2) zur Aufnahme einer Aufbauebene (6), wobei die Maske (9) entfernt von der Aufbauebene (6) angeordnet ist und unter Verwendung einer Abbildeoptik (13) ein Abbild der Maske (9) auf der Aufbauebene (6) erzeugt wird dadurch gekennezeichnet, daß die Maske (9) auf einem reflektierenden Maskenträger (8b) angeordnet ist und von der von der Strahlungsquelle (5) abgegebenen Strahlung (4) zweimal durchstrahlt wird, und daß mehrere Strahlungsquellen (5) vorgesehen sind, welche gleichzeitig oder alternativ zueinander verwendbar sind.

11. Vorrichtung nach Anspruch 10, **dadurch gekennzeichnet, daß** die Maske (9) außerhalb der Baukammer (2) und/oder räumlich getrennt von der Baukammer (2) angeordnet ist.

12. Vorrichtung nach Anspruch 10 oder 11, **dadurch gekennzeichnet, daß** die Abbildeoptik (13) oder ein Element der Abbildeoptik (13) die Baukammer (2) begrenzt.

13. Vorrichtung nach einem der Ansprüche 10 bis 12, **dadurch gekennzeichnet, daß** die Abbildeoptik (13) wenigstens eine Linse umfaßt und/oder daß ein Belichtungssystem vorgesehen ist zur flächigen Ausleuchtung der Maske (9), wobei das Belichtungssystem vorzugsweise einen zwischen der wenigstens einen Strahlungsquelle (5) und der Maske (9) angeordneten Homogenisator (14) aufweist.

14. Vorrichtung nach einem der Ansprüche 10 bis 13, **dadurch gekennzeichnet, daß** der Maskenträger (8) in dem Strahlengang der Abbildeoptik (13) beweglich angeordnet ist.

## Claims

1. A method for manufacturing a three-dimensional object (7) by selective solidification of a build material, in which a mask (9) is areally irradiated with at least one radiation source (5), wherein the mask (9) is arranged at a distance from the build plane (6), and an image of the mask (9) is generated on the build plane (6) by the use of an imaging optical system (13), **characterized in that** the mask (9) is arranged on a reflective mask carrier (8b) and is transilluminated twice by the radiation (4) delivered by the radiation source (5), and multiple radiation sources (5) are provided, which are used simultaneously or alternatively to one another.

2. The method according to claim 1, **characterized in that** an image of the mask (9) is projected onto the build plane (6).

3. The method according to claim 1 or 2, **characterized in that** the mask (9) is made up of masking material that at least partly absorbs the wavelength or wavelength spectrum of the radiation source (5) used, and/or of masking material that diffusely reflects the wavelength or wavelength spectrum of the radiation source (5) used.

4. The method according to one of claims 1 to 3, **characterized in that** the temperature of the mask carrier (8) is modifiable.

5. The method according to one of claims 1 to 4, **characterized in that** the masking material is used several times.

6. The method according to one of claims 1 to 5, **characterized in that** at least one radiation source (5) is arranged movably.

7. The method according to one of claims 1 to 6, **characterized in that** a different quantity of energy is introduced into first sub-regions of the image than into second sub-regions of the image.

8. The method according to one of claims 1 to 7, **characterized in that** radiation sources (5) having different power and/or having different wavelengths or wavelength spectra levels are used simultaneously.

9. The method according to one of claims 1 to 8, **characterized in that** radiation sources (5) that do not contribute to solidification of the build plane (6) are not activated during the solidification operation.

10. An apparatus for manufacturing a three-dimensional object (7) by selective solidification of a build material, wherein a mask (9) is areally irradiated with at least one radiation source (5),
- with a mask system (8, 9, 12) comprising a mask (9),
- with at least one radiation source (5), and
- with a build chamber (2) for receiving a build plane (6), wherein the mask (9) is arranged at a distance from the build plane (6), and an image of the mask (9) is generated on the build plane (6) by the use of an imaging optical system (13),
**characterized in that** the mask (9) is arranged on a reflective mask carrier (8b) and is transilluminated twice by the radiation (4) delivered by the radiation source (5), and multiple radiation sources (5) are provided, which are used simultaneously or alternatively to one another.

11. The apparatus according to claim 10, **characterized in that** the mask (9) is arranged outside the build chamber (2) and/or is arranged physically separately from the build chamber (2).

12. The apparatus according to claim 10 or 11, **characterized in that** the imaging optical system (13), or an element of the imaging optical system (13), delimits the build chamber (2).

13. The apparatus according to one of claims 10 to 12, **characterized in that** the imaging optical system (13) comprises at least one lens and/or an exposure system is provided for areal illumination of the mask (9), wherein the exposure system preferably comprises a homogenizer (14) arranged between the at least one radiation source (5) and the mask (9).

14. The apparatus according to one of claims 10 to 13, **characterized in that** the mask carrier (8) is arranged movably in the beam path of the imaging optical system (13).

## Revendications

1. Procédé de fabrication d'un objet tridimensionnel (7) par solidification sélective d'un matériau de formation, dans lequel
un masque (9) est irradié à plat par au moins une source (5) de rayonnement,
le masque (9) étant disposé à distance du plan de formation (6) et une image du masque (9) étant formée sur le plan de formation (6) en recourant à une optique d'imagerie (13),
**caractérisé en ce que**
le masque (9) est disposé sur un porte-masque (8b) réfléchissant et est traversé deux fois par le rayonnement (4) émis par la source (5) de rayonnement et
**en ce que** plusieurs sources (5) de rayonnement sont prévues et sont utilisées simultanément ou en variante les unes aux autres.

2. Procédé selon la revendication 1, **caractérisé en ce qu'**une image du masque (9) est projetée sur le plan de formation (6).

3. Procédé selon l'une des revendications 1 ou 2, **caractérisé en ce que** le masque (9) est constitué d'un matériau de masquage absorbant au moins une partie de la longueur d'onde ou du spectre de longueurs d'onde de la source (5) de rayonnement utilisée et/ou est constitué d'un matériau de masquage réfléchissant de manière diffuse la longueur d'onde ou le spectre de longueurs d'onde de la source (5) de rayonnement utilisée.

4. Procédé selon l'une des revendications 1 à 3, **caractérisé en ce que** la température du porte-masque (8) peut être modifiée.

5. Procédé selon l'une des revendications 1 à 4, **caractérisé en ce que** le matériau de masquage est utilisé plusieurs fois.

6. Procédé selon l'une des revendications 1 à 5, **caractérisé en ce qu'**au moins une source (5) de rayonnement est mobile.

7. Procédé selon l'une des revendications 1 à 6, **caractérisé en ce que** la quantité d'énergie apportée dans des premières parties de l'image est différente de celle apportée dans des deuxièmes parties de l'image.

8. Procédé selon l'une des revendications 1 à 7, **caractérisé en ce que** les sources (5) de rayonnement sont utilisées simultanément à différentes puissances et/ou à différentes longueurs d'onde ou spectres de longueurs d'onde.

9. Procédé selon l'une des revendications 1 à 8, **caractérisé en ce que** des sources (5) de rayonnement qui ne contribuent pas à la solidification du plan de formation (6) ne sont pas activées pendant l'opération de solidification.

10. Ensemble de fabrication d'un objet tridimensionnel (7) par solidification sélective d'un matériau de formation, dans lequel un masque (9) est irradié à plat par au moins une source (5) de rayonnement, l'ensemble présentant
un système (8, 9, 12) de masque comprenant un masque (9),
au moins une source (5) de rayonnement et
une chambre de formation (2) qui reprend un plan de formation (6),
le masque (9) étant disposé à distance du plan de formation (6) et une image du masque (9) étant formée sur le plan de formation (6) par recours à une optique d'imagerie (13),
**caractérisé en ce que**
le masque (9) est disposé sur un porte-masque (8b) réfléchissant et est traversé deux fois par le rayonnement (4) délivré par la source (5) de rayonnement et
**en ce que** plusieurs sources (5) de rayonnement sont prévues et peuvent être utilisées simultanément ou en variante les unes aux autres.

11. Ensemble selon la revendication 10, **caractérisé en ce que** le masque (9) est disposé à l'extérieur de la chambre de formation (2) et/ou à distance spatiale de la chambre de formation (2).

12. Ensemble selon les revendications 10 ou 11, **caractérisé en ce que** l'optique d'imagerie (13) ou un élément de l'optique d'imagerie (13) délimitent la chambre de formation (2).

13. Ensemble selon l'une des revendications 10 à 12, **caractérisé en ce que** l'optique d'imagerie (13) comporte au moins une lentille et/ou **en ce qu'**un système d'éclairage est prévu pour éclairer à plat le masque (9), le système d'éclairage présentant de préférence un homogénéiseur (14) disposé entre la ou les sources (5) de rayonnement et le masque (9).

14. Ensemble selon l'une des revendications 10 à 13, **caractérisé en ce que** le porte-masque (8) est disposé de manière à pouvoir se déplacer dans le parcours des rayons de l'optique d'imagerie (13).
